# EUROPÄISCHE PATENTSCHRIFT

(11) **EP 0 983 949 B1**
(45) Veröffentlichungstag und Bekanntmachung des Hinweises auf die Patenterteilung: **14.01.2004**
(21) Anmeldenummer: 99116592.9
(22) Anmeldetag: 25.08.1999
(51) Int. Cl.: B65G 1/04, B65G 47/14

(54) **Verfahren und Vorrichtung zum Zuführen von Hohlprofilen zu einer Biegemaschine bei der Herstellung von Isolierglasscheiben**
Method and device for feeding hollow profiles to a bending machine in the manufacture of insulated glass
Méthode et dispositif pour l'alimentation de profilés creux vers une machine à plier dans la fabrication de vitres isolantes

(30) Priorität: 31.08.1998 DE 19839547
(43) Veröffentlichungstag der Anmeldung: 08.03.2000
(73) Patentinhaber: Bayer Isolierglas- und Maschinentechnik GmbH, 79215 Elzach (DE)
(72) Erfinder: Bayer, Franz, 79215 Elzach (DE)
(74) Vertreter: Patent- und Rechtsanwaltssozietät, Maucher, Börjes & Kollegen

(56) Entgegenhaltungen:
- DE-U- 9 208 080
- FR-A- 2 067 634
- GB-A- 2 194 931
- US-A- 3 151 747
- US-A- 3 701 435

## Beschreibung

Die Erfindung betrifft eine Verfahren zum Zuführen von Hohlprofilen zu einer Biegemaschine bei der Herstellung von Abstandhalter-Rahmen für Isolierglasscheiben, wobei Stapel von einzeln aufeinanderliegenden Hohlprofilen jeweils in benachbart zueinander angeordnete Fächer eingefüllt, dort gelagert, für die Verarbeitung entnommen und vereinzelt und dann jeweils der Biegemaschine zum Biegen des Abstandhalterrahmens zugeführt werden.

Die Erfindung betrifft ferner eine Vorrichtung zum Lagern und zum Zuführen von Hohlprofilen zu einer Biegemaschine bei der Herstellung von Abstandhalter-Rahmen für Isolierglasscheiben gemäß dem Oberbegriff des Anspruchs 5.

Ein derartiges Verfahren und eine entsprechende Vorrichtung sind aus EP 0 470 538 B1 bekannt. Dabei sind die parallel zueinander angeordneten einzelnen Fächer jeweils schräg von oben nach unten orientiert und im unteren Bereich mit einer Entnahmeöffnung versehen, so daß jeweils ein unteres Hohlprofil aus einem derartigen Fach unter dem übrigen Stapel von Hohlprofilen entnommen werden kann. Zum Vereinzeln eines zu entnehmenden Hohlprofiles wird dabei jeweils die obere Begrenzungswand desjenigen Faches angehoben, aus welchem das Hohlprofil entnommen werden soll, so daß die Bereite dieses Faches in seinem Entnahmebereich kurzzeitig vergrößert wird, um das unterste Hohlprofil freizugeben. Gleichzeitig wird dafür gesorgt, daß nachrutschende Hohlprofile an einem Austritt aus diesem Fach gehindert werden. Eine derartige Verfahrensweise und vor allem die zugehörige Vorrichtung stellt hohe Anforderungen an die Präzision an die einzelnen Bewegungen der beteiligten mechanischen Teile.

Aus DE 92 08 080 U ist eine Vorrichtung zur Beschickung und Entnahme von Langgutkassetten bekannt, bei welcher Langgutstücke in einer vertikalen Ebene übereinander in einzelnen Fächern angeordnet sind und als Stapel angehoben werden, um ein oberes Langgutstück mit einem Greifer zu entnehmen. Eine Biegemaschine wird dabei mit den Langgutstücken nicht beschickt.

Es besteht deshalb die Aufgabe, ein Verfahren und eine Vorrichtung der eingangs genannten Art zu schaffen, womit das Vereinzeln der Hohlprofile vereinfacht ist und auf möglichst engem Raum durchgeführt werden kann.

Zur Lösung dieser Aufgabe ist das eingangs genannte Verfahren dadurch gekennzeichnet, daß jeweils ein in einem Fach befindlicher Stapel von Hohlprofilen zumindest an dem der Biegemaschine zugewandten Ende maschniell angehoben und das oberste Hohlprofil dieses Stapel in der angehobenen Position erfaßt wird, daß dann die darunter befindlichen Hohlprofile wieder abgesenkt werden und daß dabei oder danach das auf diese Weise vereinzelte Hohlprofil der Biegemaschine zugeführt wird und dass die Hohlprofile als Stapel in jeweils von einer Auflage sich gegenüber einer vertikalen Ebene schräg aufwärts erstreckende Fächer eingefüllt und in der der schrägen Orientierung der Fächer entsprechenden Schrägstellung angehoben und nach dem Vereinzeln des obersten Hohlprofiles die verbleibenden Hohlprofile des jeweiligen Stapels wieder abgesenkt werden.

Es wird also nicht ein unteres Hohlprofil unter Einsatz aufwendiger Rückhaltemittel für die darüber befindlichen weiteren Hohlprofile separiert und unter Vergrößerung einer unteren Entnahmeöffnung aus einem Fach entnommen, sondern die erfindungsgemäße Verfahrensweise nähert sich bestmöglich der wesentlich günstigeren Methode an, von einem Stapel von Hohlprofilen jeweils das oberste zu benutzten und dafür zu vereinzeln. Dabei wird aber in zweckmäßiger Weise die Vereinzelung nicht unmittelbar in der Lagerposition des Stapel durchgeführt, was nämlich erforderlich machen würde, daß eine Vorrichtung zum Erfassen des Hohlprofiles selbst mit diesem angehoben werden müßte, sondern in überraschender Weise wird zunächst der gesamte Stapel von Hohlprofilen angehoben und dadurch das oberste Hohlprofil in den Bereich einer Vereinzelungsvorrichtung gebracht, wo es dann beim anschließenden Absenken des Stapels verbleibt. Dadurch erhält es auch gleich einen Abstand zu dem übrigen Stapel, jedenfalls über einen Teil seiner Läge, so daß eine Zuführbewegung zu der Biegemaschine nur noch in geringem Maße oder gar nicht mehr zu einer Reibung relativ zu den übrigen Hohlprofilen führt. Ferner wird das Problem vermieden, daß eine jeweils ein oberstes Hohlprofil von dem ruhenden Stapel entnehmende Greifvorrichtung erkennen müßte, welche Höhe der jeweilige Stapel von Hohlprofilen hat. Das erfindungsgemäße Verfahren kann unabhängig davon ausgeführt werden, wieviele Hohlprofile in jedem einzelnen Fach gestapelt sind, weil die Anhebebewegung immer so weit geht, bis das oberste Hohlprofil in Vereinzelungsposition ist, was auf sehr einfache Weise erkennbar gemacht sein kann.

Durch das Einfüllen der Hohlprofile in jeweils von einer Auflage sich gegenüber einer vertikalen Ebene schräg aufwärts erstreckende Fächer und das Anheben in einer entsprechenden Schrägrichtung kann das Anheben und Vereinzeln und damit auch die Orientierung des einzelnen Hohlprofils in einer Lage und Anordnung erfolgen, die einer Schrägstellung einer Anlagewand oder -platte der nachgeschalteten Biegemaschine entspricht.

Um die Förderung des vereinzelten Hohlprofiles zu der Biegemaschine weiter zu verbessern, ist es zweckmäßig, wenn das in angehobener Position vereinzelte Hohlprofil benachbart und mit Abstand zu der beim Vereinzeln erfaßten Stelle zusätzlich untergriffen und dieser untergriffene Bereich insbesondere auf dieselbe Höhe wie die zuerst erfaßte Stelle des Hohlprofiles angehoben und dabei oder danach das gesamte Hohlprofil in seiner Längserstreckungsrichtung zu der Biegemaschine bewegt oder verschoben wird. Es ergibt sich dann zwischen der zuerst erfaßten Stelle des Hohlprofiles und der untergriffenen weiteren Stelle eine entsprechende geradlinige Förderstrecke, die der genauen Zuführrichtung zu der Biegemaschine entspricht und dadurch zu einer präzisen Einführung des Hohlprofiles in die Biegemaschine beiträgt. Ferner wird das Hohlprofil trotz einer erheblichen Länge über einen noch größeren Teil angehoben und von dem darunter befindlichen Stapel beabstandet, so daß ein Gleiten auf dem nächst tieferliegenden Hohlprofil weiter vermindert oder wenigstens über einen Teil der Förderstrecke ganz vermieden werden kann.

Eine weitere zweckmäßige Ausgestaltung der Erfindung kann darin bestehen, daß die benachbart zueinander angeordneten Fächer gemeinsam quer zu ihrer Längserstreckung und zur Längserstreckung der in ihnen gestapelten Hohlprofile soweit verschoben werden, daß derjenige Stapel, von welchem ein Hohlprofil entnommen werden soll, unter die Vereinzelungsvorrichtung und/oder über eine Hubvorrichtung, also dorthin gelangt, wo der in diesem Fach befindliche Stapel angehoben und vereinzelt wird. Dadurch gelangen alle Hohlprofile des Faches aus allen nebeneinanderliegenden Fächern jeweils an die Stelle, wo die Vereinzelung und vor allem die Weiterbeförderung direkt zu der Biegemaschine erfolgt. Zwar könnten auch für alle Fächer Hubvorrichtung und Vereinzelungseinrichtungen vorgesehen sein, jedoch müßte dann in anderer Weise dafür gesorgt werden, daß die vereinzelten Hohlprofile jeweils zu der Biegemaschine gelangen.

Für eine platzsparende und effektive Vereinzelung ist es günstig, wenn das Hohlprofil zum Festhalten in angehobener Position zwischen zwei Rollen eingeklemmt und nach der Vereinzelung wenigstens eine dieser Klemm- und Förder-Rollen angetrieben und das Hohlprofil dadurch zu der Biegemaschine bewegt wird. Zwar könnte man das Hohlprofil auch mittels eines Greifers zu der Biegemaschine bewegen, jedoch würde dies bedeuten, daß auch der Greifer selbst eine entsprechende Strecke durchlaufen und dafür den notwendigen Platz haben müßte. Die das Hohlprofil zwischen sich einklemmenden Rollen können jedoch an Ort und Stelle bleiben und dennoch das Hohlprofil reibschlüssig erfassen und aufgrund ihrer Drehung in Längserstreckungsrichtung vorwärts bewegen. Dabei kann gegebenenfalls die Reibung durch eine Aufrauhung oder Rändelung wenigstens einer der Rollen vergrößert sein.

Die eingangs genannte Vorrichtung ist zur Lösung der Aufgabe dadurch gekennzeichnet, dass die Fächer sich jeweils von einer unteren Auflage aufwärts erstrecken und zumindest nach oben offen sind, daß wenigstens eine Hubvorrichtung zum Untergreifen zumindest eines Endbereiches eines Stapels von Hohlprofilen im Bereich eines Faches vorgesehen ist, mittels welcher der Stapel und damit auch dessen oberstes Hohlprofil anhebbar ist, daß im oberen Bereich der Anhebebewegung des oberen Hohlprofiles eine Klemmeinrichtung zum Erfassen dieses Hohlprofiles und zum Halten während des Absenkens der übrigen Hohlprofile des zuvor angehobenen Stapels angeordnet ist, wobei die Klemmeinrichtung wenigstens zwei in ihrem lichten Abstand auf die Breite des Hohlprofiles abgestimmte Rollen aufweist, deren Drehachsen parallel zueinander und rechtwinklig zur Längserstreckung des Hohlprofils beziehungsweise der Transportrichtung dieses Hohlprofils orientiert sind, dass die Fächer und die sie unterteilenden Wandungen gegenüber einer vertikalen Ebene schräg verlaufend angeordnet sind, dass die Achsen der Rollen entsprechend schräg und die Drehachse einer Tragrolle demgegenüber um 90° verdreht schräg zu einer horizontalen Ebene orientiert sind und dass diese Schräge der Fächer der Schrägstellung einer Abstützwand für die zu biegenden Abstandhalter-Rahmen in der Biegemaschine entspricht.

Es ergibt sich so eine sehr einfache Vorrichtung zum Lagern und zum Zuführen von Hohlprofilen zu einer Biegemaschine, weil für die Lagerung lediglich nebeneinander angeordnete, nach oben offene Fächer benötigt werden, während das Zuführen zu der Biegemaschine durch eine Anhebebewegung mit Erfassen des obersten Hohlprofiles eingeleitet werden kann, d.h. die Fächer selbst müssen in keiner Weise mit Rückhalteeinrichtungen und Vorrichtungen zum Verändern der Fachabstände versehen werden, was aufwendige mechanische Mittel erfordern würde.

Dadurch, dass die Klemmeinrichtung zum Erfassen des Hohlprofils und zum Halten während des Absenkens der übrigen Hohlprofile wenigstens zwei in ihrem lichten Abstand auf die Breite des Hohlprofils abgestimmte Rollen aufweist, erhält die Klemmeinrichtung für das vereinzelte Hohlprofil eine Doppelfunktion, weil die beiden Rollen einerseits als "Klemmbacken" das angehobene Hohlprofil - gegebenenfalls durch eine Annäherung der beiden Rollen zueinander, wenn der Abstand der Rollen einstellbar ist und sich das Hohlprofil zwischen ihnen befindet - dienen und zusätzlich durch ihre Drehung die Beförderung des Hohlprofiles unterstützen oder sogar bewirken können, d.h. sie können auch zumindest teilweise eine Transporteinrichtung zum Befördern eines vereinzelten Hohlprofiles zu einer Biegemaschine bilden.

Durch die schräge Anordnung der Fächer kann die erfindungsgemäße Vorrichtung die Hohlprofile von vorneherein in einer Lage bereit halten und auch vereinzeln, die der Lage der Hohlprofile innerhalb der Biegemaschine später beim Einführen und insbesondere den sich anschließenden Biegeschritten entspricht. Somit ist eine Verdrehung des Hohlprofiles um seine Längsachse während oder nach der Zuführung nicht erforderlich.

Besonders günstig ist es dabei, wenn wenigstens eine der Rollen - zweckmäßigerweise beide Rollen - der Klemmeinrichtung zum Erfassen und Vereinzeln eines Hohlprofiles angetrieben ist oder einen motorischen Antrieb aufweist. Dadurch werden die Klemm-Rollen zusätzlich zu Förder-Rollen, weil sie auch den Vorschub des vereinzelten Hohlprofiles bewirken können, der dann unmittelbar in eine benachbart angeordnete Biegemaschine führen kann.

Um die Vereinzelung und die Beförderung eines obersten Hohlprofiles noch effektiver und genauer zu gestalten, kann mit Abstand zu der Klemmeinrichtung und zu den diese bildenden Klemm- oder Förder-Rollen in Förderrichtung des Hohlprofiles vor diesen Rollen ein in seiner Höhenlage verstellbarer und um eine abwärts gerichtete Achse derart schwenkbarer Unterstützungs- oder Tragvorsprung angeordnet sein, daß er aus einer abgewandten, insbesondere etwa parallel zur Längserstreckung der Hohlprofile und der sie aufnehmenden Fächer liegenden Position um einen Winkel, inbesondere um etwa 90° um eine abwärts gerichtete Achse verstellbar ist, so daß er das Hohlprofil untergreift und in dieser Gebrauchsstellung quer oder rechtwinklig zu der Längserstreckung des abgestützten Hohlprofiles orientiert ist. Das vereinzelte Hohlprofil ist dann gleichzeitig von den Klemmrollen und diesem Tragvorsprung gehalten und somit über eine noch größere Länge gegenüber dem inzwischen wieder abgesenkten Stapel der übrigen Hohlprofile abgehoben. Entsprechend leichtgängig kann es in seiner Längserstreckungsrichtung bewegt werden.

Die Beförderung des vereinzelten Hohlprofiles kann dadurch begünstigt und reibungsärmer gemacht werden, daß der Tragvorsprung eine freidrehbare oder angetriebene Rolle sein kann, deren Drehachse in das vereinzelte Hohlprofil untergreifender Position rechtwinklig zu dessen Längserstreckung angeordnet ist. Der Tragvorsprung unterstützt auf diese Weise vor allem die Förderbewegung des Hohlprofiles und sorgt dafür, daß ein zunächst gegenüber dieser Tragvorrichtung noch überhängender und eventuelle elastisch gekrümmter Bereich während der vorwärtsbewegung auch auf die Höhe des Tragvorsprunges und der Vereinzelungsvorrichtung bzw. der Rollen gelangt.

Die Halterung des Tragvorsprunges oder der Tragrolle kann eine Hubvorrichtung, beispielsweise einen Arbeitszylinder aufweisen, womit er bzw. sie nach dem Untergreifen des Hohlprofiles auf die Höhe der Rollen der Klemmeinrichtung anhebbar ist. Somit wird weitestgehend vermieden, daß das Hohlprofil innerhalb der Klemm- oder Förder-Rollen einer größeren Schwerkraftbelastung ausgesetzt ist, weil diese weitgehend durch den Tragvorsprung bzw. die Tragrolle aufgenommen wird.

Der Antrieb für die Klemm-Rolle(n) der Klemmeinrichtung kann derart angesteuert sein, daß er erst nach dem Anheben des Tragvorsprunges einschaltbar ist und funktioniert. Dadurch wird sichergestellt, daß das Hohlprofil unter Mitverwendung des anhebbaren Tragvorsprunges vollständig vereinzelt und in seinem erfaßten Bereich in Förderrichtung ausgerichtet ist, bevor die eigentliche Förderbewegung beginnt.

Die zum klemmenden Erfassen und Transportieren des jeweils vereinzelten Hohlprofiles dienenden Rollen können von ihrer das Hohlprofil beaufschlagenden wirksamen Umfangsfläche ausgehend einen sich an ihrer Stirnseite - entgegen der Anheberichtung des Hohlprofiles erstreckenden - verjüngenden oder konischen Bereich als Einführschräge für das zwischen sie zu hebende und von ihnen zu erfaßende Hohlprofil haben. Dadurch kann nicht nur erforderlichenfalls der Abstand der beiden Rollen durch das Einführen des Hohlprofiles selbst eingestellt werden, sondern die Einführbewegung des Hohlprofiles bei seinem Anheben zwischen die Rollen kann mit größeren Toleranzen erfolgen und dennoch zu einem präzisen Erfassen des Hohlprofiles führen. Dabei können diese Einführschrägen gerade oder gekrümmte Mantellinien haben.

Die Breite der Fächer entspricht zweckmäßigerweise der Breite der Hohlprofile, die entsprechend orientiert in diesen Fächern liegen, und die Wandungen der Fächer können die Hohlprofile bei ihrem Anheben oder Absenken in ihrer Lagerposition halten und führen. Dadurch wird verhindert, daß eventuell einzelne Hohlprofile bei der Anhebe- und Absenkbewegung um ihrer Längsachse kippen und dann später in einer Position liegen, die ihr Erfassen und insbesondere die Weiterverarbeitung erschweren würde.

Damit nur eine Hubvorrichtung und eine Vereinzelungseinrichtung bzw. Klemmeinrichtung erforderlich ist, obwohl auch mehrere beispielsweise zum gleichzeitigen Beschicken mehrerer Biegemaschinen vorhanden sein könnten, können die benachbarten parallelen Fächer an einem quer zu ihrer Längserstreckung verstellbaren Schlitten oder Wagen angeordnet sein, der mit den einzelnen Fächern jeweils in Übereinstimmung mit der Hubvorrichtung und den die Klemmeinrichtung für ein vereinzeltes Hohlprofil bildenden Rollen bringbar ist. Beispielsweise können unterschiedlich große Fächer für unterschiedlich bemessene Hohlprofile vorhanden sein, so daß wahlweise die eine oder andere Größe der Hohlprofile in Verarbeitungsposition gebracht und dort vereinzelt werden können. Ferner ist es auf diese Weise aber auch möglich, gleich große Hohlprofile in größerer Stückzahl bereit zu halten und nach Entleerung eines Faches ein nächstes Fach in den Bereich der Hubvorrichtung zu bringen und nach und nach zu vereinzeln, also die darin gestapelten Hohlprofile zu verbrauchen.

Eine konstruktiv besonders einfache Anordnung ergibt sich, wenn die Hubvorrichtung außerhalb des Fächermagazines vor den stirnseitigen Enden der Fächer in einem Bereich angeordnet ist, in welchen die in den Fächern gelagerten Hohlprofile in Längserstreckungsrichtung überstehen, und wenn die Hubvorrichtung benachbart zu den Fächern und dem Fachmagazin vor den offenen Stirnseiten der Fächer anhebbar ist. Die Fächer sind also kürzer als die in ihnen gelagerten Hohlprofile, was der Halterung und Führung beim Anheben keinen Abbruch tut. Dennoch kann die Hubvorrichtung und die Vereinzelung unabhängig von den Fächern und dem Fächermagazin selbst funktionieren, das heißt, es muß nicht etwa die untere Auflage der Fächer anhebbar sein. Entsprechend einfach kann die von dem Fächermagazin getrennt angeordnete Hubvorrichtung gestaltet sein.

Es sei noch erwähnt, daß die Drehrichtung der Klemm-Rollen umkehrbar sein kann. Dadurch ist es möglich, ein vereinzeltes Hohlprofil oder ein Reststück eines Hohlprofiles wieder in das Fächermagazin zurückzubefördern, wenn es an der Biegemaschine nicht mehr gebraucht wird oder für einen weiteren Abstandhalter-Rahmen zu kurz ist und zunächst mit einem weiteren Hohlprofil verbunden werden soll.

Es sei noch erwähnt, daß das Fächermagazin von einem Gehäuse umschlossen sein kann, welches oberhalb der Entnahmeöffnungen der Fächer einen Schlitz zum Zuführen von Hohlprofilen beim Nachfüllen und zum Ausheben und Vereinzeln der einzelnen Hohlprofile hat, der bei Nichtgebrauch vorzugsweise verschließbar sein kann. Dadurch kann der Zutritt von Luftfeuchtigkeit auf ein Minimum reduziert werden, so daß die Hohlprofile entsprechend trocken bleiben oder ein zuvor schon in sie eingefülltes Trockenmittel so wenig wie möglich während der Lagerung verbraucht wird. Der Schlitz in dem Gehäuse braucht in seiner Breite dabei nur etwa einer Fachbreite zu entsprechen.

Die Vereinzelungsvorrichtung kann aus ihrer Gebrauchsstellung in einer Ruhelage und eine Einfüllvorrichtung für neue Hohlprofile aus eine Ruhelage in den Bereich oberhalb der Fächer und umgekehrt verstellbar sein. Dadurch ist ein Entnehmen und Vereinzeln der Hohlprofile und ihr Nachfüllen an ein und derselben Gehäuseöffnung in das darunter befindliche, verschieb- oder verfahrbare Fächermagazin möglich.

Nachstehend ist ein Ausführungsbeispiel der Erfindung anhand der Zeichnung näher beschrieben. Es zeigt in zum Teil schematisierter Darstellung:

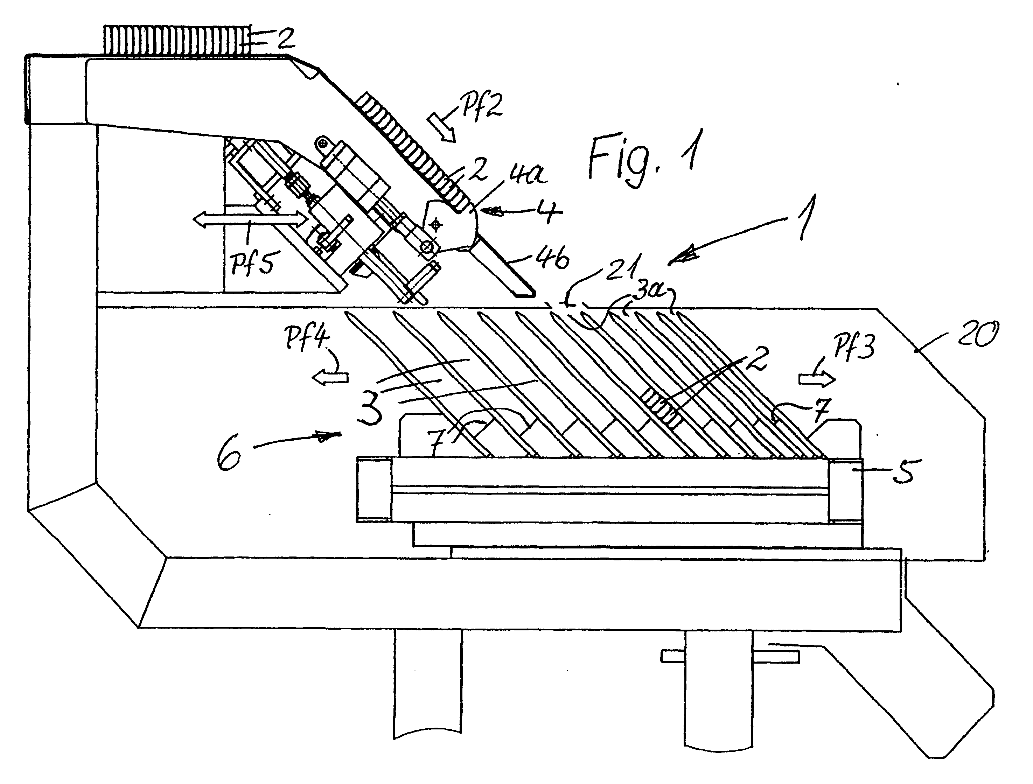

- Fig.1: eine Stirnansicht einer erfindungsgemäßen Vorrichtung zum Lagern, Vereinzeln und Zuführen von Hohlprofilen zu einer nicht näher dargestellten Biegemaschine für die Herstellung von Abstandhalter-Rahmen für Isolierglasscheiben, mit Ansicht auf die stirnseitigen Enden der in einzelnen Fächern gelagerten Hohlprofile, wobei die Fächer eines Fächermagazines unterschiedliche Breiten haben und in der Darstellung gemäß Fig.1 nur teilweise gefüllt sind und weiter von oben her mit Hohlprofilen befüllt werden,

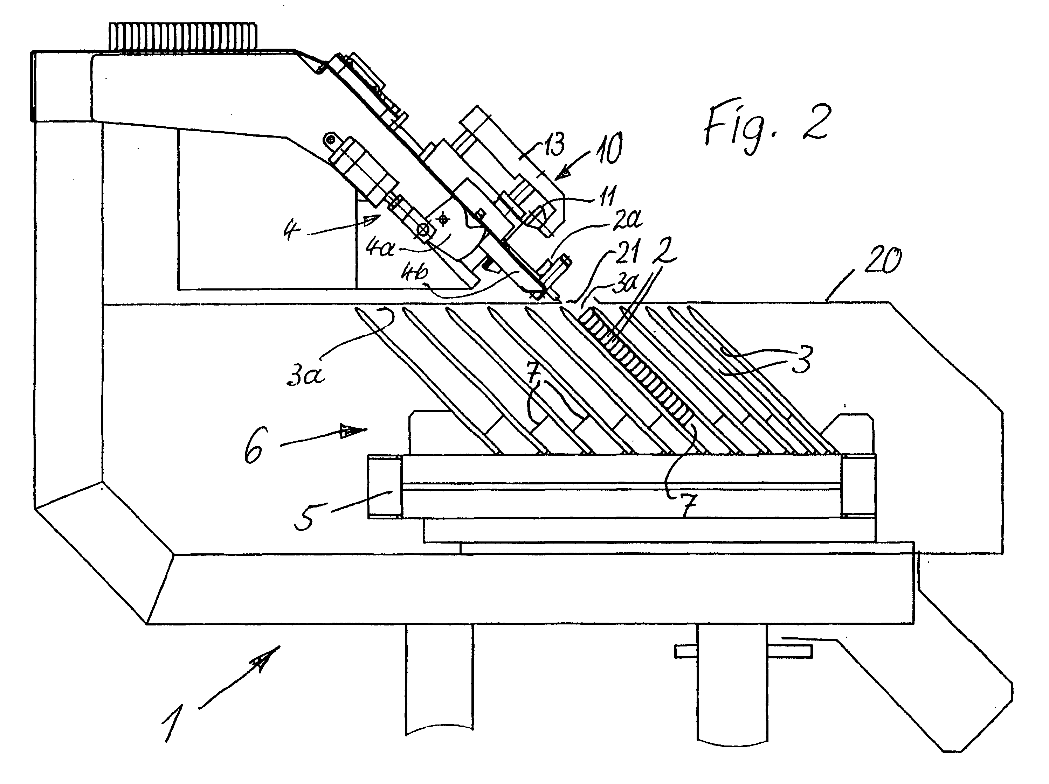

- Fig.2: eine der Fig.1 entsprechende Darstellung, wobei ein Fach vollständig befüllt ist und die Füllvorrichtung aus ihrer Gebrauchsstellung entfernt und eine in Fig.1 aus ihrer Gebrauchsstellung in eine Ruhelage verstellte Vereinzelungsvorrichtung sich nun in Gebrauchsstellung befindet, um einzelne Hohlprofile erfassen zu können,

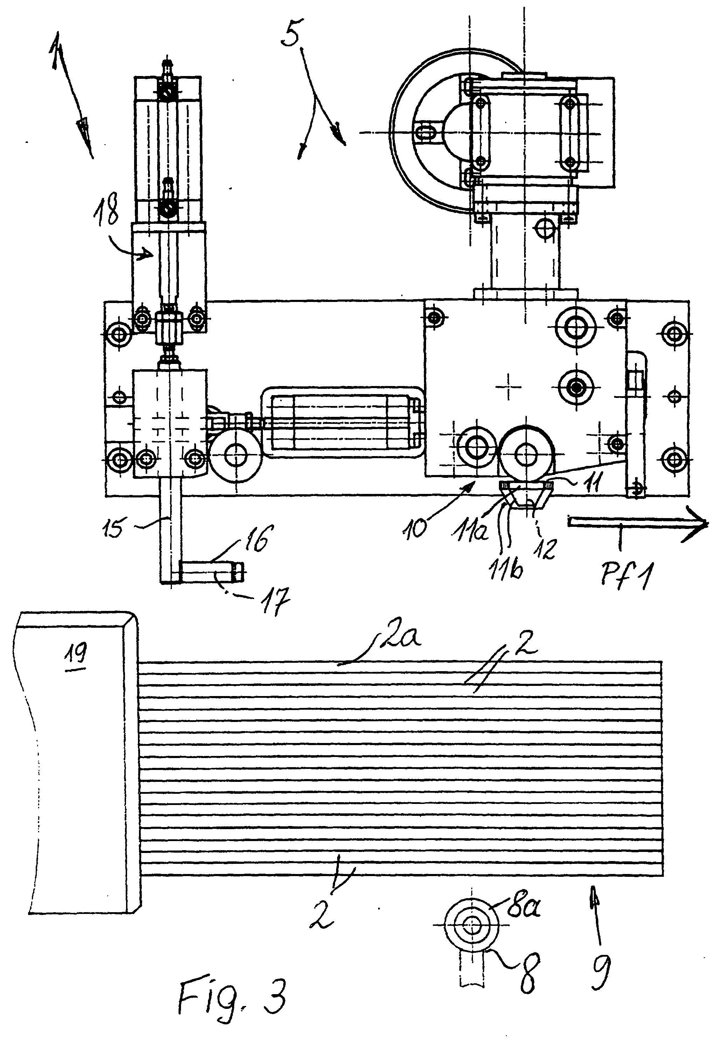

- Fig.3: eine Teil-Seitenansicht mit einem stirnseitigen Ende des Fächermagazines und den Begrenzungswänden des Faches und darüberhinausragenden Hohlprofilen, einer unterhalb der Hohlprofile befindlichen Hubvorrichtung und der über den Hohlprofilen befindlichen Vereinzelungsvorrichtung jeweils in Ausgangsstellung,

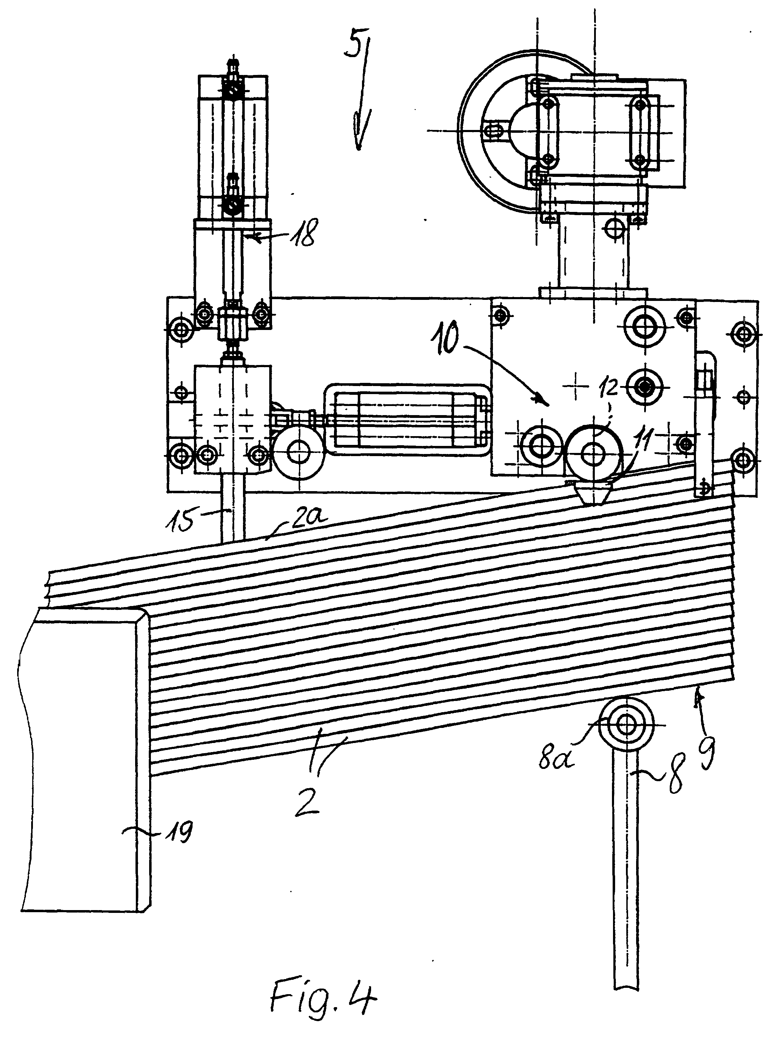

- Fig.4: eine der Fig.3 entsprechende Darstellung nach dem Anheben eines Stapels von Hohlprofilen in dem Bereich, der über die Fächer stirnseitig übersteht, wobei ein oberstes Hohlprofil zwischen zwei Klemm- und Förder-Rollen gehoben ist,

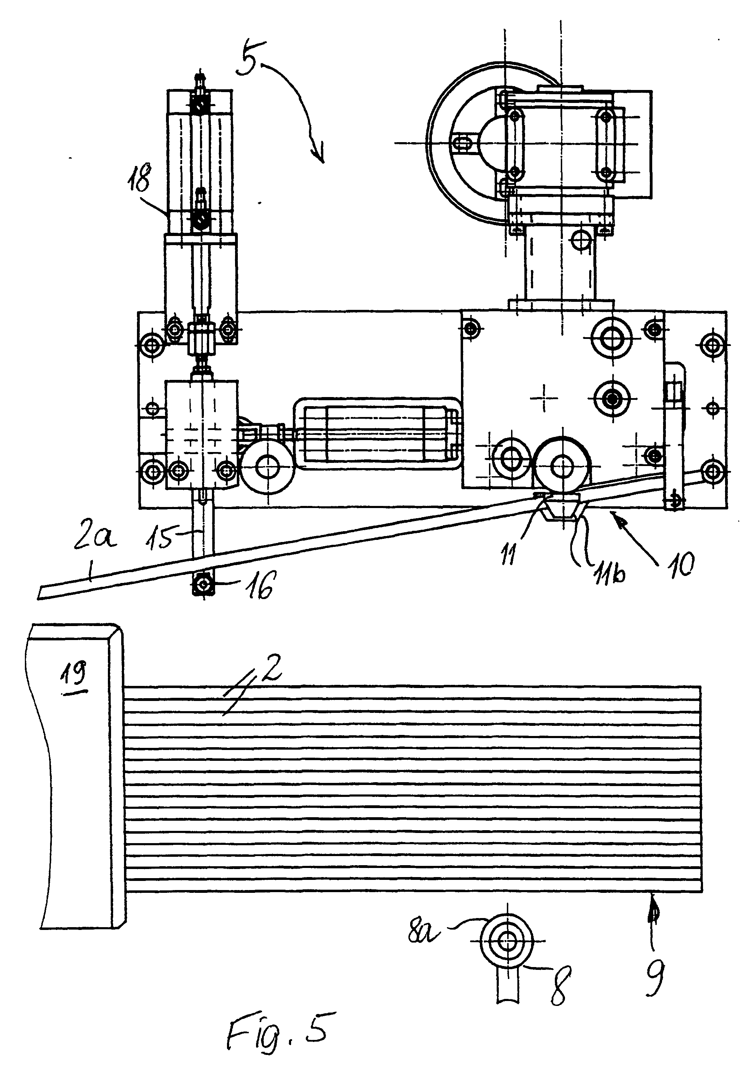

- Fig.5: eine der Fig.3 und 4 entsprechende Darstellung, in welcher das oberste angehobene Hohlprofil von den Rollen gehalten und die übrigen Hohlprofile mit der Hubvorrichtung wieder abgesenkt sind, nachdem außerdem mit Abstand zu den Rollen ein Tragvorsprung unter das vereinzelte Hohlprofil geschwenkt ist,

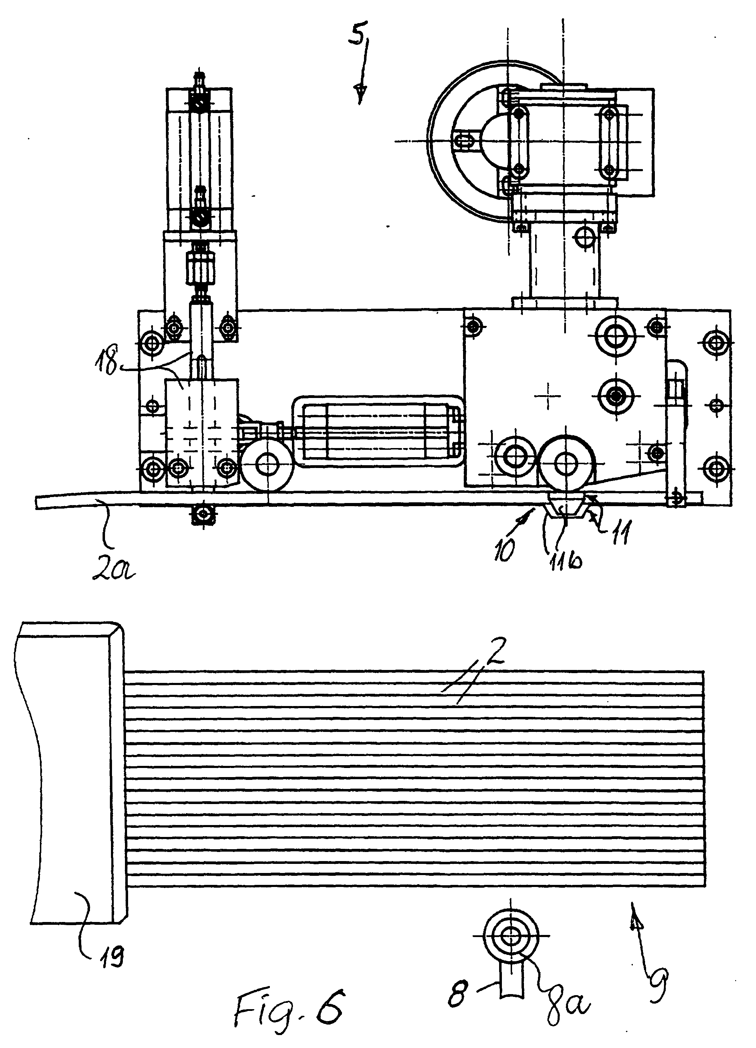

- Fig.6: eine der Fig.5 entsprechende Darstellung nach dem Anheben des Tragvorsprunges in der Weise, daß zumindest der zwischen ihm und den Rollen befindliche Abschnitt des Hohlprofiles etwa horizontal bzw. auf gleicher Höhe liegend angeordnet ist, sowie

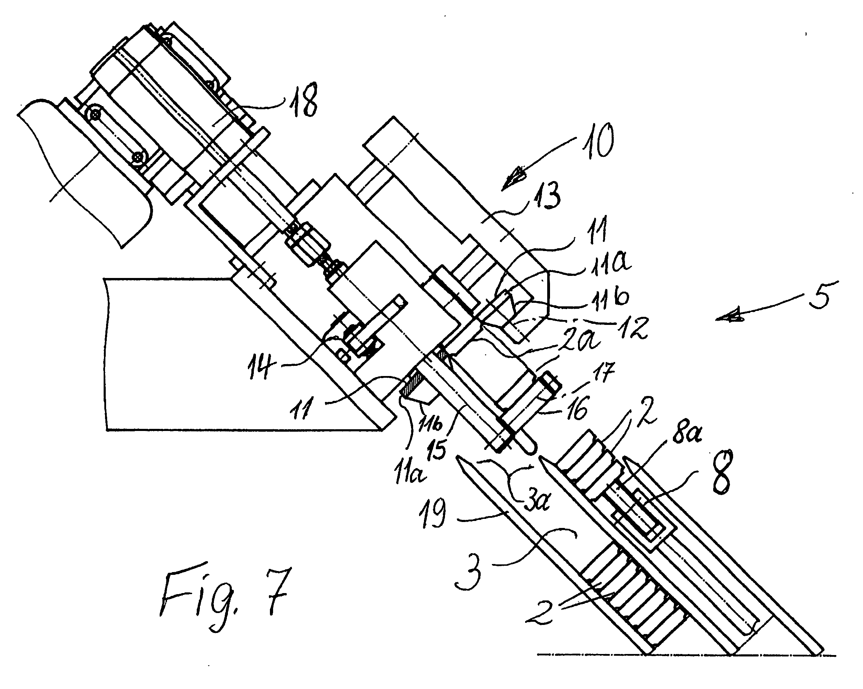

- Fig.7: eine Stirnansicht der Vereinzelungsvorrichtung nach dem Erfassen eines oberen Hohlprofiles und Untergreifen mit dem Tragvorsprung noch vor dem Anheben des Tragvorsprunges, also in der Lage etwa gemäß Fig.5, wobei die übrigen Hohlprofile sich noch in der Abwärtsbewegung befinden.

Eine im ganzen mit 1 bezeichnete Vorrichtung, die vor allem in Fig.1 und 2 gut erkennbar ist, von der aber auch weitere Teile in den übrigen Figuren dargestellt sind, dient zum Lagern und zum Zuführen von Hohlprofilen 2 zu einer nicht näher dargestellten Biegemaschine, die sich in Richtung des in Fig.3 angedeuteten Pfeiles Pf1 neben der Vorrichtung 1 befinden kann. Mit einer derartigen, in unterschiedlichen Konstruktionen bekannten Biegemaschine werden aus den Hohlprofilen 2, die bereits mit Trockenmittel gefüllt oder aber auch leer sein können, Abstandhalter-Rahmen für Isolierglasscheiben gebogen und hergestellt.

Gemäß Fig.1 und 2 weist die Vorrichtung 1 parallel zueinander benachbart angeordnete Fächer 3 unterschiedlicher Breiten zur Aufnahme von jeweils als Stapel aufeinanderliegenden Hohlprofilen 2, ferner eine Einfüllvorrichtung 4 zum Einbringen der Hohlprofile 2 in die Fächer 3 und vor allem eine in den Fig.3 bis 7 deutlicher dargestellte, im ganzen mit 5 bezeichnete Vereinzelungsvorrichtung zum Entnehmen jeweils eines einzelnen Hohlprofiles 2 aus einem Fach 3 auf.

Die Zufuhr von Hohlprofilen 2 zu den Fächern 3 erfolgt dabei gemäß dem Pfeil Pf2 in Fig.1 in einer schrägen Förderrichtung von oben nach unten, wobei die Einfüllvorrichtung 4 einen Rückhalter 4a und insbesondere eine Rutsche 4b hat, die an der oberen Öffnung 3a des jeweiligen Faches endet. Die Fächer 3 sind an einem gemäß den Pfeilen Pf3 und Pf4 in Fig.1 hin- und herverschiebbaren Schlitten 5 angeordnet, so daß sie jeweils in den Bereich der Einfüllvorrichtung 4 gebracht und dann aufgefüllt werden können.

In Fig.1 ist außerdem durch den Doppelpfeil Pf5 angedeutet, daß die noch näher zu beschreibende Vereinzelungsvorrichtung 5 aus einer Ruhelage gemäß Fig.1 in eine Gebrauchslage gemäß Fig.2 und umgekehrt und demgemäß die Einfüllvorrichtung 4 für neue Hohlprofile 2 aus einer Gebrauchslage gemäß Fig.1 in eine Ruhelage gemäß Fig.2 und umgekehrt jeweils oberhalb der Fächer 3 verstellbar sind. Sind die Fächer 3 des Fächermagazines 6 ganz oder teilweise gefüllt, kann also die Einfüllvorrichtung 4 in Ruheposition und die Vereinzelungsvorrichtung 5 in Gebrauchsstellung gebracht werden, um nunmehr einzelne Hohlprofile 2 erfassen und zu der Biegemaschine befördern zu können.

Vor allem in Fig.1 und 2, aber auch in den weiteren Figuren erkennt man, daß die Fächer 3 sich jeweils von einer Auflage 7 aufwärts erstrecken und nach oben an ihren Öffnungen 3a offen sind. Gemäß den Fig.3 bis 7 gehört zu der Vorrichtung 1 wenigstens eine Hubvorrichtung 8 mit einer Hubrolle 8a zum Untergreifen zumindest eines Endbereiches 9 eines Stapels ein Hohlprofiles 2 im Bereich eines Faches 3, womit der Stapel und damit auch dessen oberstes Hohlprofil 2a anhebbar ist, wie man es besonders gut in Fig.4 und auch in Fig.7 erkennt.

Im oberen Bereich der Anhebebewegung des oberen Hohlprofiles 2a ist eine vor allem auch in Fig.7, aber auch den übrigen Figuren erkennbare, im ganzen mit 10 bezeichnete Klemmeinrichtung 10 zum Erfaßen dieses oberen Hohlprofiles 2a und zu dessen Halten während eines anschließenden Absenkens der übrigen Hohlprofile 2 des zuvor angehobenen Stapels angeordnet. Während das Anheben des gesamten Stapels in Fig.4 dargestellt ist, erkennt man in Fig.5 den Zustand nach dem anschließenden Absenken des Stapels, wobei das obere Hohlprofil 2a aber in der oberen Position in der Klemmeinrichtung 10 verblieben ist, also vereinzelt wurde. Fig.7 zeigt ebenfalls die Halterung des oberen Hohlprofiles 2a in der angehobenen Position, während der zugehörige Stapel der übrigen Hohlprofile 2 gerade während seiner Absenkung dargestellt ist.

Die Klemmeinrichtung 10 besteht im wesentlichen aus zwei in ihrem lichten Abstand auf die Breite des Hohlprofiles 2a abgestimmten oder einstellbaren Rollen 11 bzw. weist diese Rollen 11 auf, deren Drehachsen 12 im wesentlichen parallel zueinander und rechtwinklig zur Längserstreckung des Hohlprofiles 2a bzw. der durch den Pfeil Pf1 in Fig.3 angedeuteten Transportrichtung dieses Hohlprofiles 2a orientiert sind. In Fig.7 erkennt man einen zu der Klemmeinrichtung 10 gehörenden Bügel 13, mit welchem eine der Rollen 11 gegen einen Seitensteg des angehobenen Hohlprofiles 2a verstellbar ist, um das angehobene Hohlprofil 2a zwischen den beiden Rollen 11 einzuklemmen. Dabei sind diese im Ausführungsbeispiel mit unterschiedlichen Durchmessern versehen, können aber auch übereinstimmende Durchmesser haben. Die Rollen 11 bilden also gewissermaßen die Klemmbacken der Klemmeinrichtung 10 für das vereinzelte Hohlprofil 2a.

Dabei ist eine der Rollen 11 der Klemmeinrichtung 10, nämlich die nicht von dem Bügel 13 getragene, sondern auf der gegenüberliegenden Seite des Hohlprofiles 2a wirksame Rolle 11 angetrieben bzw. hat einen motorischen Antrieb 14, so daß sie gleichzeitig als Förder-Rolle für das Hohlprofil 2a dienen kann. Die Rollen 11 erhalten so eine Doppelfunktion, indem Sie einerseits zum Erfassen und Festhalten des angehobenen obersten Hohlprofiles 2a und andererseits zu dessen Weiterbeförderung in Transportrichtung gemäß dem Pfeil Pf1 zu der Biegemaschine dienen. Gleichzeitig werden dadurch in Transportrichtung zu verschiebende oder zu bewegende Greifer oder dergleichen platzaufwendige und mechanisch aufwendige Teile vermieden.

In Fig. 5 erkennt man, daß das obere Hohlprofil 2a nach seinem Anheben und Erfassen - und dem Absenken der übrigen Hohlprofile 2 des darunter befindlichen Stapels - eine Schräglage gegenüber der eigentlichen Transportrichtung gemäß dem Pfeil Pf1 einnimmt. Deshalb ist mit Abstand zu der Klemmeinrichtung 10 und den diese im wesentlichen bildenden Klemm- und Förder-Rollen 11 in Förderrichtung des Hohlprofiles 2a vor diesen Rollen 11 ein in seiner Höhenlage verstellbarer und um eine abwärtsgerichtete Achse 15 schwenkbarer Unterstützungs- oder Tragvorsprung 16 angeordnet, der zunächst in Ausgangsstellung seinerseits mit seiner Achse 17 etwa in Förderrichtung, das heißt, parallel zu den Hohlprofilen 2 orientiert ist. Somit können die Hohlprofile 2 mit dem oberen Hohlprofil 2a bequem an ihm vorbei gehoben werden. Er befindet sich aber andererseits so nah an dem Hubweg des Stapels der Hohlprofile 2, daß er nach dem Absenken der Hohlprofile 2 um die abwärtsgerichtete Achse 15 um etwa 90° verschwenkt oder verstellt werden kann, so daß dann seine Achse 17 quer zu dem oberen Hohlprofil 2a verläuft und der Tragvorsprung 16 somit das Hohlprofil 2a untergreift. Dies erkennt man deutlich vor allem bei gleichzeitiger Betrachtung der Fig.5 und 7.

Die Halterung bzw. die abwärtsgerichtete Achse 15 des Tragvorsprunges 16 weist dabei ihrerseits eine Hubvorrichtung 18 auf, die im Ausführungsbeispiel als in Fortsetzung der Achse 15 angeordnete Arbeitszylinder ausgebildet ist, womit der Tragvorsprung 16 nach dem Untergreifen des Hohlprofiles 2a auf die Höhe der Rollen 11 der Klemmeinrichtung 10 anhebbar ist, was in Fig.6 dargestellt ist. Nach dem Untergreifen des oberen Hohlprofiles 2a noch in dessen Schräglage, wird also der Tragvorsprung 16 mit Hilfe der Hubvorrichtung 18 hochgezogen, wodurch das Hohlprofil 2a ebenfalls hochgezogen wird, so daß der zwischen dem Tragvorsprung 16 und den Rollen 11 befindliche Abschnitt des Hohlprofiles 2a in Transportrichtung gemäß dem Pfeil Pf1 ausgerichtet wird. Gleichzeitig wird dadurch das Hohlprofil 2a über eine noch größere Länge von dem darunter befindlichen Stapel weiterer Hohlprofile 2 abgehoben, so daß die nachfolgende Transportbewegung keine schädliche Reibung des transportierten Hohlprofilen 2a an den nächsttieferliegenden Hohlprofil 2 bewirkt.

In zweckmäßiger Weise ist dabei der Tragvorsprung 16 eine freidrehbare oder angetriebene Rolle oder weist eine solche um die Achse 17 drehbare Rolle auf, die die Transportbewegung des vereinzelten Hohlprofiles 2a also erleichtert, weil sich ihre Drehachse 17 in der das vereinzelte Hohlprofil 2a untergreifenden Position rechtwinklig zu dessen Längserstreckung befindet. Damit zunächst das Hohlprofil 2a vollständig vereinzelt und mit Hilfe des Tragvorsprunges 16 ausgerichtet wird, bevor eine Förderbewegung erfolgt, kann der Antrieb 14 für die eine der Klemm-Rollen 11 der Klemmeinrichtung 10 derart angesteuert werden, daß er erst nach dem Anheben des Tragvorsprunges 16 funktioniert oder einschaltbar ist bzw. eventuell auch selbst tätig durch die Beendigung des Anhebebevorganges eingeschaltet wird.

Die zum klemmenden Erfassen und Transportieren des vereinzelten Hohlprofiles 2a dienenden Rollen 11 haben von ihrer das Hohlprofil 2a beaufschlagenden wirksamen zylindrischen Umfangsfläche 11a ausgehend einen sich an ihrer Stirnseite verjüngenden oder konischen Bereich 11b als Einführschräge für das zwischen sie zu hebende und von Ihnen zu erfassenden Hohlprofil 2a, so daß die Hubbewegung mit größerer Toleranz ausgeführt werden kann. Außerdem müssen dann die beiden Rollen 11 während des Einführens des Hohlprofiles 2a nicht so weit auseinander verschoben werden (Fig.7).

Die Breite der Fächer 3 entspricht der jeweiligen Breite der von Ihnen aufgenommenen Hohlprofile 2 und die Wandungen 19 der Fächer 3 halten und führen die Hohlprofile 2 gemäß Fig.7 bei ihrem Anheben und Absenken, so daß sie nicht verkippen können. Dies wird vor allem auch anhand der Fig.7 erkennbar. Dabei haben die Wandungen 19 im Bereich der oberen Öffnung 3a der Fächer 3 ebenfalls Einführschrägen, um das Befüllen der Fächer zu vereinfachen.

Es wurde schon erwähnt, daß die Fächer 3 an einem quer zu ihrer Längserstreckung verstellbaren Schlitten 5 oder Wagen angeordnet sind. Dieser kann mit den einzelnen Fächern 3 also jeweils in Übereinstimmung mit der Hubvorrichtung 8 und den die Klemmeinrichtung 10 für ein vereinzeltes Hohlprofil 2a bildenden Rollen 11 bzw. deren Zwischenraum gebracht werden. Dabei ist die Hubvorrichtung 8 außerhalb des Fächermagazines 6 und der Fächer 3 vor den stirnseitigen Enden dieser Fächer 3 in einem Bereich angeordnet, in welchen die in den Fächern 3 gelagerten Hohlprofile 2 in Längserstreckungsrichtung überstehen, wie man es besonders gut in den Fig.3 bis 6 erkennt. Die Hubvorrichtung 8 ist also benachbart zu den Fächern 3 und in Förderrichtung hinter diesen Fächern 3 vor den offenen Stirnseiten der Fächer 3 angeordnet und anhebbar. Somit ist sie unabhängig von dem eigentlichen Fächermagazin 6, welches also bequem jeweils mit einem Fach 3 in Flucht mit der Hubvorrichtung 8 verschoben werden kann.

Es sei noch erwähnt, daß die Drehrichtung der Klemm-Rollen 11 und insbesondere des Antriebes 14 umkehrbar sein kann, um ein erfaßtes und vereinzeltes Hohlprofil 2a eventuell nach teilweisem Verbrauch wieder zurückbefördern zu können, so daß ein Reststück wieder in dem Fächermagazin 6 abgelegt werden kann, wobei eine umgekehrte Verfahrensweise wie beim Vereinzeln durchgeführt werden kann. Solche Reststücke können dann entweder später erneut der Biegemaschine zugeführt oder aber zunächst mit weiteren Hohlprofilstücken zu einem neuen längeren Hohlprofil 2 verbunden werden.

Die Fächer 3 und die sie unterteilenden Wandungen 19 oder Zwischenwände sind im Ausführungsbeispiel gegenüber einer vertikalen Ebene schräg verlaufend angeordnet und die Achsen 1 2 der Klemm-Rollen 11 sind entsprechend schräg und die Drehachse 17 der Tragrolle des Tragvorsprunges 16 ist demgegenüber um 90° verdreht schräg zu einer horizontalen Ebene orientiert, wobei diese Schräge der Fächer 3 der Schrägstellung einer Abstützwand für die zu biegenden Abstandhalter-Rahmen in der Biegemaschine entspricht, so daß die Hohlprofile 2a schon in der für das Biegen benötigten Orientierung zugeführt werden. Man erkennt dies in Fig.1, 2 und besonders gut in Fig.7.

Das Fächermagazin 6 ist von einem Gehäuse 20 umschlossen, welches oberhalb der Entnahmeöffnungen 3a der Fächer 3 einen Schlitz 21 wahlweise zum Zuführen von Hohlprofilen 2 beim Nachfüllen und zum Ausheben und Vereinzeln der einzelnen Hohlprofile 2 hat, der in Fig.1 und 2 schematisch angedeutet ist und bei Nichtgebrauch verschließbar sein kann, um die in dem Fächermagazin befindlichen Hohlprofile 2 vor Luftfeuchtigkeit zu schützen. Da das Fächermagazin 6 mittels des Schlittens 5 in Richtung der Pfeile Pf3 und Pf4 quer zu den Fächern 3 verstellbar ist, kann jeweils ein Fach 3 mit der gewünschten Abmessung von Hohlprofilen 2 unter diesen Schlitz 21 gebracht werden, um dann die Hohlprofile 2 entnehmen und vereinzeln und wieder in das Fach 3 einfüllen zu können.

Anhand der Fig.4 bis 7 wird deutlich, daß bei der Vorrichtung 1 in vorteilhafter und zweckmäßiger Weise jeweils nur ein Endbereich 9 der gelagerten, in der Regel sechs Meter langen Hohlprofile 2 angehoben und zur Vereinzelung erfaßt wird, nämlich der der Biegemaschine näherliegende Endbereich dieser Hohlprofile 2, und daß dann ein entsprechend vereinzeltes Hohlprofil durch drehbare Förder-Rollen 11 zu der Biegemaschine verschoben oder gezogen wird, wobei es noch durch den Tragvorsprung oder die Tragrolle 16 unterstützt sein kann, so daß sich eine mechanisch einfache und platzsparende Vereinzelung und Verschiebung der Hohlprofile 2 ergibt.

Dabei wird so verfahren, daß jeweils ein in einem Fach 3 befindlicher Stapel von Hohlprofilen an dem der Biegemaschine zugewandten Ende 9 angehoben und das oberste Hohlprofil 2a dieses Stapels in der angehobenen Position erfaßt wird, daß dann die darunter befindlichen Hohlprofile 2 wieder abgesenkt werden und daß dabei oder danach das auf diese Weise vereinzelte Hohlprofil 2a der Biegemaschine zugeführt wird.

Die Hohlprofile 2 werden dazu zunächst als Stapel in jeweils von der Auflage 7 sich schräg aufwärts erstreckende Fächer 3 eingefüllt und in der dieser schrägen Orientierung der Fächer 3 entsprechenden Schrägrichtung (Fig.7) angehoben und nach dem Vereinzeln des obersten Hohlprofiles 2a werden dann die verbleibenden Hohlprofile 2 des Stapels wieder in ihr Fach 3 abgesenkt. Das vereinzelte Hohlprofil 2a wird dabei benachbart und mit Abstand zu der beim Vereinzeln von den Rollen 11 erfaßten Stelle mit dem Tragvorsprung 16 untergriffen, wonach dieser untergriffene Bereich auf dieselbe Höhe wie die zuerst erfaßte Stelle des Hohlprofilen angehoben wird, wonach das gesamte Hohlprofil 2a in seiner Längserstreckungsrichtung gemäß dem Pfeil Pf1 zu der Biegemaschine verschoben wird.

Es ergibt sich also mit Hilfe der Vorrichtung 1 eine maschinell einfache Verfahrensweise zum Vereinzeln und Zuführen von Hohlprofilen aus einer Lagerung oder einem Fächermagazin 6 zu einer Biegemaschine. Durch die Verwendung von Klemm- und Förder-Rollen 11 können dabei ihrerseits in Förderrichtung bewegbare Greifer vermieden werden.

Zum Zuführen von Hohlprofilen 2 zu einer Biegemaschine bei der Herstellung von Abstandhalter-Rahmen für Isolierglasscheiben werden Stapel von einzeln aufeinanderliegenden Hohlprofilen 2 jeweils in benachbart zueinander angeordnete Fächer 3 eines Fächermagazines 6 eingefüllt und für die Verarbeitung dadurch einzeln entnommen, daß jeweils ein in einem Fach 3 befindlicher Stapel von Hohlprofilen 2 zumindest an dem der Biegemaschine zugewandten Ende 9 mittels einer Hubvorrichtung 8 insgesamt angehoben, dann das oberste Hohlprofil 2a dieses Stapels in der angehobenen Position erfaßt und danach die darunter befindlichen restlichen Hohlprofile 2 wieder abgesenkt werden. Anschließend wird das vereinzelte Hohlprofil 2a der Biegemaschine zugeführt vorzugsweise mittels des in der angehobenen Position klemmend erfassenden und drehbaren Rollen 11, wobei es zusätzlich etwas mit Abstand zu diesen Rollen 11 noch von einem Tragvorsprung 16 untergriffen und unterstützt werden kann.

## Patentansprüche

1. Verfahren zum Zuführen von Hohlprofilen (2) zu einer Biegemaschine bei der Herstellung von Abstandhalter-Rahmen für Isolierglasscheiben, wobei Stapel von einzeln aufeinanderliegenden Hohlprofilen (2) jeweils in benachbart zueinander angeordnete Fächer (3) eingefüllt, dort gelagert, für die Verarbeitung entnommen und vereinzelt und dann jeweils der Biegemaschine zum Biegen der Abstandhalter-Rahmen zugeführt werden, **dadurch gekennzeichnet, dass** jeweils ein in einem Fach (3) befindlicher Stapel von Hohlprofilen (2) an dem der Biegemaschine zugewandten Ende (9) maschinell angehoben und das oberste Hohlprofil (2a) dieses Stapels in der angehobenen Position erfasst wird, dass dann die darunter befindlichen Hohlprofile (2) wieder abgesenkt werden und dass dabei oder danach das auf diese Weise vereinzelte Hohlprofil (2a) der Biegemaschine zugeführt wird und dass die Hohlprofile (2a) als Stapel in jeweils von einer Auflage (7) sich gegenüber einer vertikalen Ebene schräg aufwärts erstreckende Fächer (3) eingefüllt und in der der schrägen Orientierung der Fächer (3) entsprechenden Schrägrichtung angehoben und nach dem Vereinzeln des obersten Hohlprofiles (2a) die verbleibenden Hohlprofile (2) des jeweiligen Stapels wieder abgesenkt werden.

2. Verfahren nach Anspruch 1, **dadurch gekennzeichnet, dass** das in angehobener Position vereinzelte Hohlprofil (2a) benachbart und mit Abstand zu der beim Vereinzeln erfassten Stelle untergriffen und dieser untergriffene Bereich, insbesondere auf dieselbe Höhe wie die zuerst erfasste Stelle des Hohlprofiles, angehoben und dabei oder danach das gesamte Hohlprofil (2a) in seiner Längserstreckungsrichtung zu der Biegemaschine bewegt oder verschoben wird.

3. Verfahren nach einem der Ansprüche 1 oder 2, **dadurch gekennzeichnet, dass** die benachbart zueinander angeordneten Fächer (3) gemeinsam quer zu ihrer Längserstreckung und zur Längserstreckung der in ihnen gestapelten Hohlprofile (2) soweit verschoben werden, dass derjenige Stapel, von welchem ein Hohlprofil (2a) entnommen werden soll unter die Vereinzelungsvorrichtung (5) und/oder über eine Hubvorrichtung (8), also dorthin gelangt, wo der in diesem Fach (3) befindliche Stapel angehoben und vereinzelt wird.

4. Verfahren nach einem der Ansprüche 1 bis 3, **dadurch gekennzeichnet, dass** das Hohlprofil (2) zum Festhalten in angehobener Position zwischen zwei Rollen (11) eingeklemmt und nach der Vereinzelung wenigstens eine dieser Rollen (11) angetrieben und das Hohlprofil (2) dadurch zu der Biegemaschine bewegt wird.

5. Vorrichtung (1) zum Lagern und zum Zuführen von Hohlprofilen (2) zu einer Biegemaschine bei der Herstellung von Abstandhalter-Rahmen für Isolierglasscheiben, mit parallel zueinander benachbart angeordneten Fächern (3) zur Aufnahme von jeweils als Stapel aufeinanderliegenden Hohlprofilen (2) und mit einer Vereinzelungsvorrichtung (5) zum Entnehmen jeweils eines einzelnen Hohlprofiles (2) aus einem Fach (3), insbesondere zur Durchführung des Verfahrens nach einem der Ansprüche 1 bis 4, wobei die Fächer (3) sich jeweils von einer Auflage (7) aufwärts erstrecken und zumindest nach oben offen sind, dass wenigstens eine Hubvorrichtung (8) zum Untergreifen eines Endbereiches (9) eines Stapels von Hohlprofilen (2) im Bereich eines Faches (3) vorgesehen ist, mittels welcher der Stapel und damit auch dessen oberstes Hohlprofil (2a) anhebbar ist, dass im oberen Bereich der Anhebebewegung des oberen Hohlprofiles (2a) eine Klemmeinrichtung (10) zum Erfassen dieses Hohlprofiles (2a) und zum Halten während des Absenkens der übrigen Hohlprofile (2) des zuvor angehobenen Stapels angeordnet ist, **dadurch gekennzeichnet, dass** die Klemmeinrichtung (10) wenigstens zwei in ihrem lichten Abstand auf die Breite des Hohlprofiles (2a) abgestimmte Rollen (11) aufweist, deren Drehachsen (12) parallel zueinander und rechtwinklig zur Längserstreckung des Hohlprofils (2a) beziehungsweise der Transportrichtung dieses Hohlprofils (2a) orientiert sind, dass die Fächer (3) und die sie unterteilenden Wandungen (19) gegenüber einer vertikalen Ebene schräg verlaufend angeordnet sind, dass die Achsen der Rollen (11) entsprechend schräg und die Drehachse (17) einer Tragrolle demgegenüber um 90° verdreht schräg zu einer horizontalen Ebene orientiert sind und dass diese Schräge der Fächer (3) der Schrägstellung einer Abstützwand für die zu biegenden Abstandhalter-Rahmen in der Biegemaschine entspricht.

6. Vorrichtung nach Anspruch 5, **dadurch gekennzeichnet, dass** der Abstand der Rollen (11) einstellbar ist.

7. Vorrichtung nach Anspruch 5 oder 6, **dadurch gekennzeichnet, dass** wenigstens eine der Rollen (11) der Klemmeinrichtung (10) zum Erfassen und Vereinzeln eines Hohlprofiles angetrieben ist oder einen motorischen Antrieb (14) aufweist.

8. Vorrichtung nach einem der Ansprüche 5 bis 7, **dadurch gekennzeichnet, dass** mit Abstand zu der Klemmeinrichtung (10) und den diese im wesentlichen bildenden Klemm-Rollen (11) in Förderrichtung (Pf1) des Hohlprofiles (2a) vor diesen Rollen (11) ein in seiner Höhenlage verstellbarer und um eine abwärtsgerichtete Achse (15) derart schwenkoder drehbarer Unterstützungs- oder Tragvorsprung (16) angeordnet ist, dass er aus einer abgewandten, insbesondere etwa parallel zur Längserstreckung der Hohlprofile (2) und der sie aufnehmenden Fächer (3) liegenden Position um einen Winkel, insbesondere um etwa 90° verstellbar ist, so dass er das Hohlprofil (2a) untergreift und in dieser Gebrauchsstellung quer oder rechtwinklig zu der Längserstreckung des abgestützten Hohlprofiles (2a) orientiert ist.

9. Vorrichtung nach einem Ansprüche 5 bis 8, **dadurch gekennzeichnet, dass** der Tragvorsprung (16) eine freidrehbare oder antreibbare Rolle ist oder aufweist, deren Drehachse (17) in das vereinzelte Hohlprofil (2a) untergreifender Position rechtwinklig zu dessen Längserstreckung angeordnet ist.

10. Vorrichtung nach einem der Ansprüche 5 bis 9, **dadurch gekennzeichnet, dass** die Halterung des Tragvorsprunges (16) oder der Tragrolle eine Hubvorrichtung (18), beispielsweise einen Arbeitszylinder, aufweist, womit er bzw. sie nach dem Untergreifen des Hohlprofiles (2a) auf die Höhe der Rollen (11) der Klemmeinrichtung (10) anhebbar ist.

11. Vorrichtung nach einem der Ansprüche 5 bis 10, **dadurch gekennzeichnet, dass** der Antrieb (4) für die Klemm-Rolle(n) (11) der Klemmeinrichtung (10) derart angesteuert ist, dass er erst nach dem Anheben des Tragvorsprunges (16) einschaltbar ist.

12. Vorrichtung nach einem der Ansprüche 5 bis 11, **dadurch gekennzeichnet, dass** die zum klemmenden Erfassen und Transportieren des jeweils vereinzelten Hohlprofiles (2a) dienenden Rollen (11) von ihrer das Hohlprofil (2a) beaufschlagenden wirksamen Umfangsfläche (11a) ausgehend einen sich an ihrer Stirnseite verjüngenden oder konischen Bereich als Einführschräge für das zwischen sie zu hebenden und von ihnen zu erfassende Hohlprofil (2a) haben.

13. Vorrichtung nach einem der Ansprüche 5 bis 12, **dadurch gekennzeichnet, dass** die Breite der Fächer (3) der Breite der Hohlprofile (2) entspricht und die Wandungen (19) der Fächer (3) die Hohlprofile (2) bei ihrem Anheben oder Absenken in ihrer Lagerposition halten und führen.

14. Vorrichtung nach einem der Ansprüche 5 bis 13, **dadurch gekennzeichnet, dass** die benachbarten parallelen Fächer (3) an einem quer zu ihrer Längserstreckung verstellbaren Schlitten (5) oder Wagen angeordnet sind, der mit den einzelnen Fächern (3) jeweils in Übereinstimmung mit der Hubvorrichtung (8) und den die Klemmeinrichtung (10) für ein vereinzeltes Hohlprofil (2a) bildenden Rollen (11) bringbar ist.

15. Vorrichtung nach einem der Ansprüche 5 bis 14, **dadurch gekennzeichnet, dass** die Hubvorrichtung (8) außerhalb des Fächermagazines (6) vor den stirnseitigen Enden der Fächer (3) in einem Bereich angeordnet ist, in welchen die in den Fächern (3) gelagerten Hohlprofile (2) in Längserstreckungsrichtung überstehen und dass die Hubvorrichtung (8) benachbart zu den Fächern (3) und dem Fachmagazin vor den offenen Stirnseiten der Fächer (3) anhebbar ist.

16. Vorrichtung nach einem der Ansprüche 5 bis 15, **dadurch gekennzeichnet, dass** die Drehrichtung der Klemm-Rolle (11) umkehrbar ist.

17. Vorrichtung nach einem der Ansprüche 5 bis 16, **dadurch gekennzeichnet, dass** das Fächermagazin (6) von einem Gehäuse (20) umschlossen ist, welches oberhalb der Entnahmeöffnungen (3a) der Fächer (3) einen Schlitz (21) zum Zuführen von Hohlprofilen (2) beim Nachfüllen und zum Ausheben und Vereinzeln der einzelnen Hohlprofile (2a) hat, der bei Nichtgebrauch vorzugsweise verschließbar ist.

18. Vorrichtung nach einem der Ansprüche 5 bis 17, **dadurch gekennzeichnet, dass** die Vereinzelungsvorrichtung (5) aus ihrer Gebrauchsstellung in eine Ruhelage und eine Einfüllvorrichtung (4) für neue Hohlprofile (2) aus einer Ruhelage in den Bereich oberhalb der Fächer (3) und umgekehrt verstellbar sind.

## Claims

1. Process for feeding hollow sections (2) to a bending machine in the production of spacer frames for double-glazing panels, wherein stacks of individual hollow sections (2) resting on top of one another are each placed in compartments (3) arranged adjacent to one another, stored therein, taken out and separated for processing and then fed to the bending machine for bending the spacer frame, **characterised in that** a stack of hollow sections (2) contained in a compartment (3) is mechanically raised at the end (9) closest to the bending machine and the topmost hollow section (2a) of this stack is gripped in the raised position, then the hollow sections (2) located underneath it are lowered again and at the same time or thereafter the hollow section (2a) thus singled out is fed to the bending machine and the hollow sections (2a) are introduced as a stack into compartments (3) extending diagonally upwards from a support (7) relative to a vertical plane and are raised in the diagonal direction corresponding to the diagonal orientation of the compartments (3) and after the topmost hollow section (2a) has been separated off the remaining hollow sections (2) of the stack in question are lowered again.

2. Process according to claim 1, **characterised in that** the hollow section (2a) separated off in the raised position is gripped from below adjacent to and at a spacing from the point which is gripped during the separation process, and this region which is gripped from below is raised, particularly to the same height as the point on the hollow section which was gripped first, and at the same time or thereafter the entire hollow section (2a) is moved or pushed along in its longitudinal direction towards the bending machine.

3. Process according to one of claims 1 or 2, **characterised in that** the compartments (3) arranged adjacent to one another are moved along together transversely with respect to their longitudinal direction and to the longitudinal direction of the hollow sections (2) stacked therein until the particular stack from which a hollow section (2a) is to be removed has arrived underneath the separating device (5) and/or above a lifting device (8), i.e. at the point where the stack contained in this compartment (3) is raised and separated off.

4. Process according to one of claims 1 to 3, **characterised in that** the hollow section (2) is clamped between two rollers (11) to secure it in the raised position and after separation at least one of these rollers (11) is actuated and the hollow section (2) is thus moved to the bending machine.

5. Apparatus (1) for storing and feeding hollow sections (2) to a bending machine in the production of spacer frames for double-glazing panels, with compartments (3) arranged parallel and adjacent to one another for receiving the hollow sections (2) which are stacked on top of one another and with a separating device (5) for removing an individual hollow section (2) from a compartment (3), particularly for carrying out the process according to one of claims 1 to 4, wherein the compartments (3) each extend upwards from a support (7) and are open at least at the top, in that at least one lifting device (8) is provided in the region of a compartment for gripping an end region (9) of a stack of hollow sections (2) from below, by means of which the stack and hence also its topmost hollow section (2a) can be lifted up, in that in the upper region of the lifting movement of the upper hollow section (2a) there is a clamping device (10) for gripping this hollow section (2a) and for holding it during the lowering of the other hollow sections (2) in the stack which was previously raised, **characterised in that** the clamping device (10) comprises at least two rollers (11) the internal spacing of which is matched to the width of the hollow section (2a), the rotation axes (12) of which are oriented parallel to one another and at right angles to the longitudinal direction of the hollow section (2a) or to the direction of transportation of this hollow section (2a), **in that** the compartments (3) and the walls (19) which subdivide them are arranged to extend diagonally with respect to a vertical plane, **in that** the axes of the rollers (11) are oriented correspondingly diagonally and the rotation axis (17) of a support roller is oriented diagonally with respect to a horizontal plane, rotated through 90° thereto, and **in that** this inclined position of the compartments (3) corresponds to the inclined position of a supporting wall for the spacer frame which is to be bent in the bending machine.

6. Apparatus according to claim 5, **characterised in that** the spacing of the rollers (11) is adjustable.

7. Apparatus according to claim 5 or 6, **characterised in that** at least one of the rollers (11) of the clamping device (10) for gripping and separating off a hollow section is driven or has a motor drive (14).

8. Apparatus according to one of claims 5 to 7, **characterised in that** at a spacing from the clamping device (10) and the clamping rollers (11) which essentially form it, in the direction of conveying (Pf1) of the hollow section (2a) in front of these rollers (11), is mounted a support or carrying projection (16) which is vertically adjustable and is pivotable or rotatable about a downwardly directed spindle (15) so that it can be moved out of a remote position which is, in particular, substantially parallel to the longitudinal direction of the hollow sections (2) and the compartments (3) which hold them, about an angle, particularly about 90°, so that it grips the hollow section (2a) from below and in this position of use is oriented transversely or at right angles to the longitudinal direction of the supported hollow section (2a).

9. Apparatus according to one of claims 5 to 8, **characterised in that** the support projection (16) is or comprises a freely rotatable or drivable roller the rotation axis (17) of which, in the position in which it grips the hollow section (2a) from below, is arranged at right angles to the longitudinal direction thereof.

10. Apparatus according to one of claims 5 to 9, **characterised in that** the mounting of the support projection (16) or of the support roller comprises a lifting device (18), for example a working cylinder, by means of which said support projection or roller can be raised to the height of the rollers (11) of the clamping device (10) after gripping the hollow section (2a) from underneath.

11. Apparatus according to one of claims 5 to 10, **characterised in that** the drive (4) for the clamping roller(s) of the clamping device (10) is operated so that it can only be started up after the support projection (16) has been raised.

12. Apparatus according to one of claims 5 to 11, **characterised in that**, starting from their effective circumferential surface (11a) acting upon the hollow section (2a), the rollers (11) which serve to grab, clamp and transport the separated hollow section (2a) have a region which tapers or is conical at its end face to act as an insertion slope for the hollow section (2a) which they are to grab and lift between them.

13. Apparatus according to one of claims 5 to 12, **characterised in that** the width of the compartments (3) corresponds to the width of the hollow sections (2) and the walls (19) of the compartments (3) hold and guide the hollow sections (2) as they are raised or lowered into their storage position.

14. Apparatus according to one of claims 5 to 13, **characterised in that** the adjacent parallel compartments (3) are mounted on a sled (5) or carriage which is movable transversely with respect to their longitudinal direction and which can be moved so that the individual compartments (3) are aligned with the lifting device (8) and the rollers (11) which form the clamping device (10) for an individual hollow section (2a).

15. Apparatus according to one of claims 5 to 14, **characterised in that** the lifting device (8) is mounted outside the compartmental store (6) in front of the end faces of the compartments (3) in a region where the hollow sections (2) stored in the compartments (3) project in the longitudinal direction and the lifting device (8) is capable of being raised adjacent to the compartments (3) and the compartmental store in front of the open end faces of the compartments (3).

16. Apparatus according to one of claims 5 to 15, **characterised in that** the direction of rotation of the clamping roller (11) is reversible.

17. Apparatus according to one of claims 5 to 16, **characterised in that** the compartmental store (6) is surrounded by a housing (20) which has a slot (21) above the removal openings (3a) of the compartments, for the introduction of hollow sections (2) when refilling the store and for removing and separating off the individual hollow sections (2a), said slot preferably being adapted to be closed off when not in use.

18. Apparatus according to one of claims 5 to 17, **characterised in that** the separating device (5) can be moved out of its position of use into a resting position and a filling device (4) for adding new hollow sections (2) can be moved out of a resting position into the region above the compartments (3) and *vice versa*.

## Revendications

1. Procédé pour alimenter une machine à plier en profilés creux (2) lors de la fabrication de cadres d'écartement pour vitrages isolants, des piles de profilés creux (2) individuellement superposés étant respectivement remplies dans des casiers juxtaposés (3), y étant entreposées, et les profilés creux en étant prélevés pour le traitement et individualisés, puis respectivement apportés à la machine à plier destinée à plier les cadres d'écartement, **caractérisé en ce qu'**une pile respective de profilés creux (2), se trouvant dans un casier (3), est soulevée mécaniquement à l'extrémité (9) tournée vers la machine à plier et le profilé creux supérieur (2a) de cette pile est saisi dans la position soulevée, **en ce que** les profilés creux (2) sous-jacents sont ensuite rabaissés, et **en ce qu'**alors ou ensuite, le profilé creux (2a) ainsi individualisé est apporté à la machine à plier, et **en ce que** les profilés creux (2a) sont remplis sous forme de piles dans des casiers (3) s'étendant respectivement vers le haut à partir d'un support (7), en oblique par rapport à un plan vertical, et sont soulevés dans la direction oblique correspondant à l'orientation oblique des casiers (3), et à la suite de l'individualisation du profilé creux supérieur (2a), les profilés restants (2) de la pile respective sont rabaissés.

2. Procédé selon la revendication 1, **caractérisé en ce que** le profilé creux (2a) individualisé dans la position soulevée est engagé par en dessous au voisinage et à distance de l'endroit saisi lors de l'individualisation, et cette région engagée par en dessous est soulevée, notamment à la même hauteur que l'endroit initialement saisi du profilé creux, et l'ensemble du profilé creux (2a) est alors ou ensuite déplacé ou coulissé dans la direction de son développement longitudinal, vers la machine à plier.

3. Procédé selon la revendication 1 ou 2, **caractérisé en ce que** les casiers (3) disposés en voisinage mutuel peuvent être conjointement coulissés, transversalement à leur développement longitudinal et au développement longitudinal des profilés creux (2) empilés dans ces casiers, suffisamment pour que la pile à partir de laquelle un profilé creux (2a) doit être prélevé arrive en dessous du dispositif d'individualisation (5) et/ou au-dessus d'un dispositif de levage (8), donc là où la pile se trouvant dans ce casier (3) est soulevée et individualisée.

4. Procédé selon l'une des revendications 1 à 3, **caractérisé en ce que** le profilé creux (2) est serré entre deux rouleaux (11) afin d'être maintenu bloqué en position soulevée, et au moins un de ces rouleaux (11) est entraîné une fois l'individualisation effectuée, de sorte que le profilé creux (2) est déplacé vers la machine à plier.

5. Dispositif (1) pour entreposer des profilés creux (2) et pour les apporter à une machine à plier lors de la fabrication de cadres d'écartement pour vitrages isolants, avec des casiers (3) juxtaposés parallèlement entre eux et destinés à recevoir des profilés creux (2) respectivement superposés sous forme de piles, et avec un dispositif d'individualisation (5) pour prélever respectivement un profilé creux (2) individuel à partir d'un casier (3), notamment pour la mise en oeuvre du procédé selon l'une des revendications 1 à 4, les casiers (3) s'étendant respectivement vers le haut à partir d'un support (7) et étant ouverts au moins vers le haut, au moins un dispositif de levage (8) étant prévu pour s'engager en dessous d'une région terminale (9) d'une pile de profilés creux (2) dans la région d'un casier (3), dispositif qui permet de soulever la pile et donc également son profilé creux supérieur (2a), et un équipement de serrage (10) étant disposé dans la région supérieure du mouvement de soulèvement du profilé creux supérieur (2a), pour saisir ce profilé creux (2a) et le maintenir pendant l'abaissement des autres profilés creux (2) de la pile préalablement soulevée, **caractérisé en ce que** l'équipement de serrage (10) présente au moins deux rouleaux (11), dont l'écartement est adapté à la largeur du profilé creux (2a) et dont les axes de rotation (12) sont orientés parallèlement entre eux et perpendiculairement au développement longitudinal du profilé creux (2a) ou encore à la direction de transport de ce profilé creux (2a), **en ce que** les casiers (3) et les cloisons (19) qui les subdivisent sont disposés en s'étendant en oblique par rapport à un plan vertical, **en ce que** les axes des rouleaux (11) sont orientés avec une obliquité correspondante et l'axe de rotation (17) d'un rouleau porteur est orienté en oblique par rapport à un plan horizontal, en étant tourné à 90° par rapport aux axes précités, et **en ce que** cette obliquité des casiers (3) correspond à la position oblique d'une paroi de soutien pour les cadres d'écartement à plier dans la machine à plier.

6. Dispositif selon la revendication 5, **caractérisé en ce que** l'écartement des rouleaux (11) est réglable.

7. Dispositif selon la revendication 5 ou 6, **caractérisé en ce qu'**au moins un des rouleaux (11) de l'équipement de serrage (10), afin de saisir et d'individualiser un profilé creux, est entraîné ou présente un entraînement motorisé (14).

8. Dispositif selon l'une des revendications 5 à 7, **caractérisé en ce qu'**une saillie de soutien ou saillie porteuse (16) est disposée à distance de l'équipement de serrage (10) et des rouleaux de serrage (11) constituant pour l'essentiel cet équipement, avant ces rouleaux (11) dans la direction de transport (Pf1) du profilé creux (2a), saillie qui est réglable quant à sa position en hauteur et qui est montée à rotation ou à pivotement, autour d'un axe (15) dirigé vers le bas, de telle sorte qu'elle peut être déplacée d'un certain angle, notamment d'environ 90°, à partir d'une position opposée au développement longitudinal des profilés creux (2) et des casiers (3) qui les reçoivent, notamment environ parallèle à ce développement longitudinal, de telle sorte qu'elle s'engage en dessous du profilé creux (2a) et est orientée, dans cette position d'utilisation, transversalement ou perpendiculairement au développement longitudinal du profilé creux (2a) soutenu.

9. Dispositif selon l'une des revendications 5 à 8, **caractérisé en ce que** la saillie porteuse (16) est ou présente un rouleau librement rotatif ou pouvant être entraîné, dont l'axe de rotation (17) est disposé, dans la position d'engagement en dessous du profilé creux individualisé (2a), perpendiculairement au développement longitudinal de ce dernier.

10. Dispositif selon l'une des revendications 5 à 9, **caractérisé en ce que** le support de la saillie porteuse (16) ou du rouleau porteur présente un dispositif de levage (18), par exemple un vérin de travail, de sorte qu'une fois engagé(e) en dessous du profilé creux (2a), la saillie ou respectivement le rouleau peut être soulevé(e) à la hauteur des rouleaux (11) de l'équipement de serrage (10).

11. Dispositif selon l'une des revendications 5 à 10, **caractérisé en ce que** l'entraînement (4) pour le ou les rouleaux de serrage (11) de l'équipement de serrage (10) est asservi de telle sorte qu'il peut être activé à la suite du soulèvement de la saillie porteuse (16).

12. Dispositif selon l'une des revendications 5 à 11, **caractérisé en ce que** les rouleaux (11) servent à la saisie par serrage et au transport du profilé creux individualisé (2a) respectif possède, à partir de leur face circonférentielle active (11a) sollicitant le profilé creux (2a), une région conique ou se rétrécissant sur leur côté frontal, comme biais d'introduction pour le profilé creux (2a) devant être soulevé entre eux ou saisi par eux.

13. Dispositif selon l'une des revendications 5 à 12, **caractérisé en ce que** la largeur des casiers (3) correspond à la largeur des profilés creux (2), et les cloisons (19) des casiers (3) maintiennent et guident les profilés creux (2) lors de leur soulèvement ou de leur abaissement dans leur position d'entreposage.

14. Dispositif selon l'une des revendications 5 à 13, **caractérisé en ce que** les casiers voisins parallèles (3) sont disposés sur un coulisseau (5) ou chariot pouvant être déplacé transversalement à leur développement longitudinal, lequel peut être amené avec les casiers individuels (3) respectivement en coïncidence avec le dispositif de levage (8) et les rouleaux (11) constituant l'équipement de serrage (10) pour un profilé creux individualisé (2a).

15. Dispositif selon l'une des revendications 5 à 14, **caractérisé en ce que** le dispositif de levage (8) est disposé en dehors du magasin de casiers (6), devant les extrémités frontales des casiers (3), dans une région dans laquelle les profilés creux (2) entreposés dans les casiers (3) dépassent dans la direction de leur développement longitudinal, et **en ce que** le dispositif de levage (8) peut être soulevé au voisinage des casiers (3) et du magasin de casiers, devant les côtés frontaux ouverts des casiers (3).

16. Dispositif selon l'une des revendications 5 à 15, **caractérisé en ce que** la direction de rotation du rouleau de serrage (11) peut être inversée.

17. Dispositif selon l'une des revendications 5 à 16, **caractérisé en ce que** le magasin de casiers (6) est entouré par un boîtier (20) qui possède, au-dessus des ouvertures de prélèvement (3a) des casiers (3), une fente (21) pour l'apport de profilés creux (2) lors du remplissage et pour enlever et individualiser les profilés creux individuels (2a), fente qui peut de préférence être fermée lorsqu'elle n'est pas utilisée.

18. Dispositif selon l'une des revendications 5 à 17, **caractérisé en ce que** le dispositif d'individualisation (5) peut être déplacé de sa position d'utilisation dans une position de repos et vice versa, et un dispositif (4) de remplissage de nouveaux profilés creux (2) peut être déplacé à partir d'une position de repos dans la région située au-dessus des casiers (3), et vice versa.
